Europäisches Patentamt

European Patent Office

Office européen des brevets

(19)

(11) **EP 0 873 469 B1**

(12) **EUROPEAN PATENT SPECIFICATION**

(45) Date of publication and mention
of the grant of the patent:
**08.12.1999 Bulletin 1999/49**

(21) Application number: **97900325.8**

(22) Date of filing: **13.01.1997**

(51) Int Cl.⁶: **F01N 3/20**

(86) International application number:
**PCT/GB97/00076**

(87) International publication number:
**WO 97/25525 (17.07.1997 Gazette 1997/31)**

(54) **REDUCING THE LIGHT-OFF TIME OF A CATALYTIC CONVERTER**

VERRINGERN DER ANSPRINGZEIT EINES KATALYTISCHEN UMWANDLERS

REDUCTION DE LA DUREE D'ALLUMAGE D'UN CONVERTISSEUR CATALYTIQUE

(84) Designated Contracting States:
**DE FR GB**

(30) Priority: **13.01.1996 GB 9600692**

(43) Date of publication of application:
**28.10.1998 Bulletin 1998/44**

(73) Proprietors:
• **FORD MOTOR COMPANY LIMITED**
  **Brentwood, Essex CM13 3BW (GB)**
  Designated Contracting States:
  **GB**
• **FORD-WERKE AKTIENGESELLSCHAFT**
  **50735 Köln (DE)**
  Designated Contracting States:
  **DE**
• **FORD FRANCE S. A.**
  **92506 Rueil-Malmaison Cédex (FR)**
  Designated Contracting States:
  **FR**

(72) Inventor: **MA, Thomas, Tsoi-Hei**
**South Woodham Ferrers, Essex CM3 5YB (GB)**

(74) Representative: **Messulam, Alec Moses**
**A. Messulam & Co.**
**24 Broadway**
**Leigh-on-Sea Essex SS9 1BN (GB)**

(56) References cited:
**EP-A- 0 588 887**     **WO-A-91/16529**
**US-A- 3 823 555**

# Description

## Field of the invention

The present invention relates to an internal combustion engine having a catalytic converter and an exhaust gas ignition (EGI) system for assisting in reducing the light-off time of the catalytic converter, the EGI system comprising means operative during cold starting of the engine to enrich the mixture in the combustible charge for the engine to produce exhaust gases containing sufficient hydrogen and carbon monoxide to be ignitable when cold upon the addition of air to the exhaust gas mixture, and means for igniting the mixture upstream of the catalytic converter to generate a flame for heating the catalytic converter.

## Background of the invention

EP-A-0 588 887 describes a basic EGI system which involves operating an engine in such a manner as to allow almost immediate ignition of an afterburner positioned upstream of the catalytic converter. For the exhaust gas mixture to be ignitable when cold, it needs to contain hydrogen and this is produced in the combustion chamber by the reversible water gas reaction

$$CO + H_2O \Leftrightarrow CO_2 + H_2$$

in which carbon monoxide reacts with steam to produce hydrogen and carbon dioxide.

In order to achieve an exhaust gas mixture containing sufficient hydrogen to be ignitable when cold, it has been necessary to supply an extremely rich mixture to the combustion chamber and because of this level of enrichment there have been concerns about plug fouling and excessive cylinder wear.

## Object of the invention

The present invention therefore seeks to provide an engine having an EGI system in which the combustion conditions are optimised to enable an ignitable mixture to be achieved in the afterburner with a minimum addition of excess fuel to the combustible charge.

## Summary of the invention

In accordance with a first aspect of the present invention, there is provided an internal combustion engine having a catalytic converter and an exhaust gas ignition (EGI) system for assisting in reducing the light-off time of the catalytic converter, the EGI system comprising means for enriching the mixture strength of the combustible charge supplied to the engine cylinders during cold starting of the engine to produce exhaust gases containing sufficient hydrogen and carbon monoxide to be ignitable when cold upon the addition of air to the exhaust gas mixture, and means for igniting the mixture upstream of the catalytic converter to generate a flame for heating the catalytic converter, the engine further comprising means for advancing the spark timing of the engine during operation of the EGI system to achieve a lower temperature in the burnt charge prior to the opening of the exhaust valve and for returning the spark timing to its normal setting at the end of operation of the EGI system.

In accordance with a second aspect of the invention, there is provided an internal combustion engine having a catalytic converter and an exhaust gas ignition (EGI) system for assisting in reducing the light-off time of the catalytic converter, the EGI system comprising means for enriching the mixture strength of the combustible charge supplied to the engine cylinders during cold starting of the engine to produce exhaust gases containing sufficient hydrogen and carbon monoxide to be ignitable when cold upon the addition of air to the exhaust gas mixture, and means for igniting the mixture upstream of the catalytic converter to generate a flame for heating the catalytic converter, the engine further comprising means for retarding the opening time of the exhaust valves of the engine during operation of the EGI system to achieve a lower temperature in the burnt charge prior to the opening of the exhaust valve and for returning the timing of the exhaust valves to its normal setting at the end of operation of the EGI system.

Preferably, the duration of the exhaust valve event is reduced but it is alternatively possible to phase shift an exhaust cam to delay the opening and closing times of the exhaust valves by the same amount without affecting the duration of the valve event.

It is of course possible to alter the valve timing as well as the ignition timing to optimise the production of hydrogen which is dependent on the temperature of the burnt gases prior to the opening of the exhaust valve.

There have been previous proposals to alter the ignition timing to assist in speeding the lighting off of a catalytic converter but these differ from the proposal of the present invention in following respects. First, the intention of prior art systems was to emit hotter exhaust gases and to continue the combustion process in the exhaust system to generate the heat necessary to heat the catalytic converter. By contrast, the present invention seeks to reduce the temperature of the combustion charge at the instant that the exhaust valves open to favour the production of hydrogen for subsequent ignition in the afterburner. Hence, the prior art proposals would retard the ignition to delay the onset of combustion rather than advance it as proposed in the present invention. The second important difference is that in the present invention the perturbation of the ignition and/or valve timing lasts only a few seconds, while the flame in the afterburner is ignited and is returned to its normal setting thereafter once flame is extinguished, whereas the prior art relies on such perturbations to heat the catalytic converter and the modification of the timing is maintained until the entire catalytic converter has reached its light-off temperature.

Brief description of the drawings

The invention will now be described further, by way of example, with reference to the accompanying drawing, in which:

> Figure 1 shows a block diagram of an engine having an EGI system, and
> Figure 2 shows the variation of the hydrogen and oxygen content of the exhaust gases in the afterburner with variation of the mixture strength applied to the combustion chambers of the engine.

Detailed description of the invention

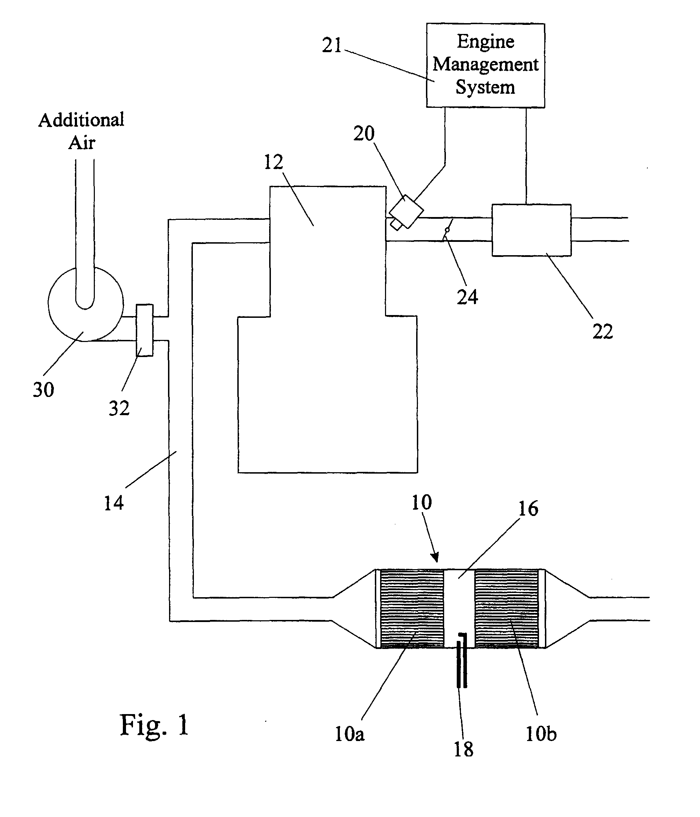

Figure 1 shows an engine 12 having an intake system that comprises a main throttle 24, a mass air flow meter and a fuel injector 20. The fuel injector 20 is controlled by an engine management system 21 which receives as one of its input signals the output signal of the mass air flow meter 22. The engine has an exhaust pipe 14 that leads to a catalytic converter 10 having two catalyst matrix bricks 10a and 10b separated from one another by an afterburner chamber 16 that contains an igniter 18. The igniter 18 is shown as being a spark plug but it may alternatively be a glow plug. An air pump 30 feeds additional air into the exhaust pipe 14 upstream of the catalytic converter 10 through a valve 32.

The system operates in essentially the same way as that described in EP-0 588 887 which is incorporated herein by reference. During cold starts, the injector 20 is controlled by the fuel metering system 21 to supply a mixture to the engine that is significantly richer than stoichiometric. As a result the exhaust gases retain a combustible component that includes unburnt hydrocarbons, carbon monoxide and hydrogen. When air is added to the exhaust gases, the resulting mixture becomes ignitable even when cold. The mixture is ignited in the afterburner chamber 16 by the igniter 18 and burns to heat the second brick 10b, reducing the time taken for it to reach its light-off temperature.

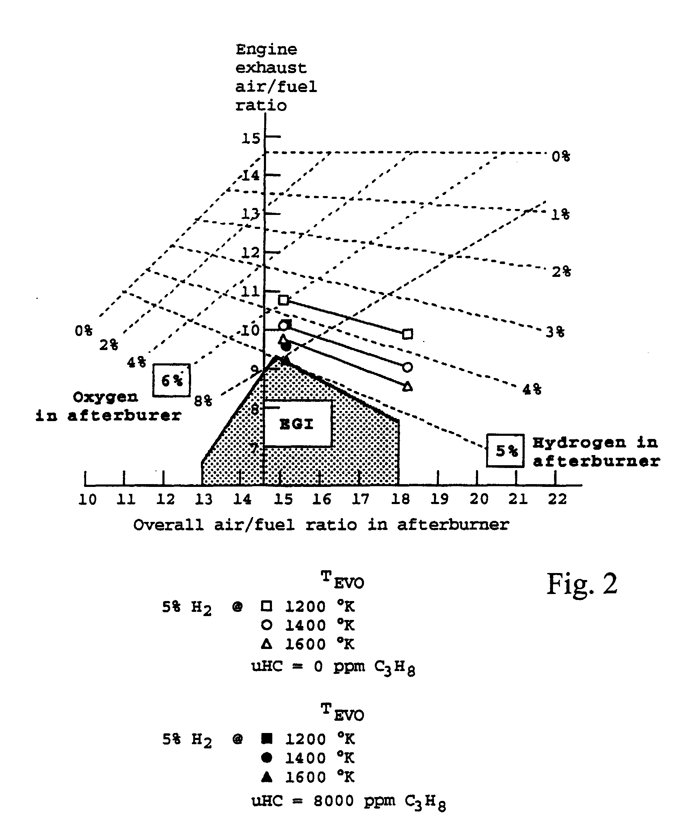

Figure 2 of the accompanying drawings is similar to that of Figure 2 of EP-A-0 588 887 which provides a fuller explanation of combustion mechanism resulting in the production of hydrogen and the importance of hydrogen to the ability to ignite the combustion gases in the afterburner immediately after the engine has been started and while the exhaust system and the combustion gases are still cold.

Figure 2 shows a map of how the concentrations of hydrogen and oxygen in the afterburner vary with the air to fuel mixture supplied to the engine alone and the overall air to fuel mixture supplied to the engine and exhaust system combined. The vertical axis of the map represents a range of rich mixtures supplied to the engine, the right hand side of the horizontal axis represents a range of overall lean mixtures when the additional air in the exhaust is included in the total air to fuel chemical balance. The afterburner should always be operated within the region on the right hand side of the vertical axis to ensure that there is excess air in the afterburner to react with all the combustible gases of hydrogen, carbon monoxide and hydrocarbons completely.

In the diagram, there are lines drawn of constant oxygen and constant hydrogen concentrations in the afterburner under different operating conditions of the engine and afterburner. Lines of constant carbon monoxide and constant hydrocarbons in the afterburner may also be drawn in this map but they have been omitted. It has been found that the range of values that allows cold ignition of the exhaust gases reaching the afterburner chamber fall within the area that is shaded in the drawing. To allow some margin for error, it is preferred to operate within the window labelled EGI (exhaust gas ignition).

It can be seen from the diagram that the minimum conditions for ignitability of the exhaust/air mixture are that the hydrogen concentration must exceed 5% by volume at the same time as the oxygen concentration exceeds 6% by volume.

It should be appreciated that the absolute values of air to fuel ratio indicated in the drawing would be different for different fuels depending on the stoichiometry and the composition of the fuel. However absolute values of the hydrogen and oxygen concentrations necessary for reliable ignition and stable burning in the afterburner at ambient temperature would remain the same regardless of the type of hydrocarbon fuel used.

The dashed lines in the drawing representing constant oxygen and hydrogen concentrations are the same line as Figure 2 of EP-A-0 588 887, which were measured with fixed values of ignition timing and valve timing. These values were at the time selected to maximise exhaust gas temperature and corresponded to a burnt gas temperature of around 1600°K at the end of the power stroke.

The present invention is predicated on the realisation that it is more important to optimise the production of hydrogen than to maximise the temperature of the gases in the afterburner.

Hydrogen is only produced by the water gas reaction within the combustion chamber in temperatures of the order of 1000°K or more. As soon as the exhaust valves open, the temperature and pressure drop significantly and bring to an end the water gas reaction thereby freezing the hydrogen concentration at the level reached at the end of the engine power stroke. The water gas reaction is reversible and the equilibrium of the reactions is dependent upon temperature, favouring the production of hydrogen at lower temperatures and favouring the production of carbon monoxide at higher temperatures.

Paradoxically, therefore, the ease of igniting the exhaust gases in the afterburner is increased by allowing the burnt gas temperature to be reduced as much as possible before the exhaust valves are opened, thus favouring a higher concentration of hydrogen for any given mixture strength of the burnt gases. This is the exact opposite of the previous assumption that the burnt gases should be released when they are as hot as possible in order to maximise the temperature of the exhaust gases reaching the afterburner.

It is known that the burnt gas temperature in the combustion chambers immediately before the exhaust valves open can be reduced by advancing the ignition timing and retarding the exhaust valve opening time. Either or preferably both of these steps can be taken in the present invention to optimise hydrogen production and thereby allow exhaust gas ignition to occur with lesser levels of fuel enrichment of the engine combustion charge. Thus, in the drawing, the effect of advancing ignition and retarding exhaust valve opening is to raise the 5% hydrogen line above the original dashed line to positions of the filled symbols for an overall air to fuel ratio of around 15 along the x-axis. These points correspond to temperatures of 1600°K, 1400°K and 1200°K in the burnt gases prior to the opening of the exhaust valve and also allow for the presence of extra unburnt hydrocarbon in the exhaust system derived from condensed fuel wetting the cold combustion chamber walls. If such extra hydrocarbon is removed by a hydrocarbon absorbing trap, or by arranging the afterburner chamber between two bricks of the catalytic converter, in which case the first brick can act as a hydrocarbon absorbing trap, less air will need to be added to the exhaust system to maintain the overall air to fuel ratio. Consequently, the constant 5% hydrogen lines at 1600°K, 1400°K and 1200°K will be raised further to the positions represented by solid lines and open symbols in the drawing, corresponding to still less fuel enrichment of the combustible charge supplied to the engine cylinders in order to achieve an ignitable mixture in the afterburner.

It has been found that a 10° advance of the ignition timing reduces the burnt gas temperature at the end of the power stroke by around 150°K while a 10° retard of the exhaust valve opening reduced the burnt gas temperature at the end of the power stroke by around 50°K. The invention proposes perturbing the spark and/or exhaust valve opening timing only during the period that the EGI system is in operation to optimise hydrogen production. As a result, the ignitable zone represented by the shaded area in the diagram is expanded upwards, allowing the EGI calibration window to be raised to lie within a region of lesser degree of fuel enrichment of the engine combustion charge.

It should be mentioned that during idling, it is common practice to retard the spark timing from its optimum MBT (mean best torque) value. In the invention, the perturbation during EGI will be in the direction of restoring the timing to its MBT value.

## Claims

1. An internal combustion engine (12) having a catalytic converter (10b) and an exhaust gas ignition (EGI) system for assisting in reducing the light-off time of the catalytic converter, the EGI system comprising means (21) for enriching the mixture strength of the combustible charge supplied to the engine cylinders during cold starting of the engine to produce exhaust gases containing sufficient hydrogen and carbon monoxide to be ignitable when cold upon the addition of air to the exhaust gas mixture, and means (18) for igniting the mixture upstream of the catalytic converter (10b) to generate a flame for heating the catalytic converter, characterised in that the engine further comprises means (21) for advancing the spark timing of the engine during operation of the EGI system to achieve a lower temperature in the burnt charge prior to the opening of the exhaust valve and for returning the spark timing to its normal setting at the end of operation of the EGI system.

2. An internal combustion engine (12) having a catalytic converter (10b) and an exhaust gas ignition (EGI) system for assisting in reducing the light-off time of the catalytic converter, the EGI system comprising means (21) for enriching the mixture strength of the combustible charge supplied to the engine cylinders during cold starting of the engine to produce exhaust gases containing sufficient hydrogen and carbon monoxide to be ignitable when cold upon the addition of air to the exhaust gas mixture, and means (18) for igniting the mixture upstream of the catalytic converter (10b) to generate a flame for heating the catalytic converter, characterised in that the engine further comprises means (21) for retarding the opening time of the exhaust valves of the engine during operation of the EGI system to achieve a lower temperature in the burnt charge prior to the opening of the exhaust valve and for returning the timing of the exhaust valves to its normal setting at the end of operation of the EGI system.

3. An engine as claimed in claim 2, in which the closing time of the exhaust valve is maintained constant, the duration of the exhaust valve event thereby being reduced.

4. An engine as claimed in claim 2 or 3, further comprising means for advancing the spark timing of the engine during operation of the EGI system to achieve further lowering of the temperature in the burnt charge prior to the opening of the exhaust valve and for returning the spark timing to its normal setting at the end of operation of the EGI system.

## Patentansprüche

1. Ein Verbrennungsmotor (12), der einen Katalysator (10b) und ein Abgas-Zündsystem (EGI) besitzt, um bei der Verminderung der Anspringzeit des Katalysators zu helfen, wobei das EGI-System Vorrichtungen (21) zur Anreicherung der Gemischzusammensetzung der während eines Kaltstarts des Motors zu den Zylindern des Motors gelieferten brennbaren Ladung umfaßt; um Abgase zu erzeugen die ausreichend Wasserstoff und Kohlenmonoxid enthalten, um nach Zugabe von Luft zur Abgasmischung im kalten Zustand zündfähig zu sein, und Vorrichtungen (18) zur Zündung der Mischung oberhalb des Katalysators (10b), um eine Flamme zum Erhitzen des Katalysators zu erzeugen; dadurch gekennzeichnet, daß der Motor weiterhin Vorrichtungen (21) umfaßt, um die Zündungseinstellung des Motors -während des Betriebs des EGI-Systems- vorzuverlegen, um in der verbrannten Ladung vor dem Öffnen des Auslaßventils eine niedrigere Temperatur zu erreichen, und um die Zündungseinstellung - am Endes des Betriebs des EGI-Systems - auf ihre normalen Einstellungen zurückzuverlegen.

2. Ein Verbrennungsmotor (12), der einen Katalysator (10b) und ein Abgas-Zündsystem (EGI) besitzt, um bei der Verminderung der Anspringzeit des Katalysators zu helfen, wobei das EGI-System Vorrichtungen (21) zur Anreicherung der Gemischzusammensetzung der während eines Kaltstarts des Motors zu den Zylindern des Motors gelieferten brennbaren Ladung umfaßt; um Abgase zu erzeugen die ausreichend Wasserstoff und Kohlenmonoxid enthalten, um nach Zugabe von Luft zur Abgasmischung im kalten Zustand zündfähig zu sein, und Vorrichtungen (18) zur Zündung der Mischung oberhalb des Katalysators (10b), um eine Flamme zum Erhitzen des Katalysators zu erzeugen; dadurch gekennzeichnet, daß der Motor weiterhin Vorrichtungen (21) umfaßt, um die Öffnungszeit der Auslaßventile des Motors -während des Betriebs des EGI-Systems- zu verzögern, um in der verbrannten Ladung vor dem Öffnen des Auslaßventils eine niedrigere Temperatur zu erreichen, und um die Synchronisierung der Auslaßventile - am Ende des Betriebs des EGI-Systems - auf ihre normalen Einstellungen zurückzustellen.

3. Ein Motor nach Anspruch 2, in welchem die Schließzeit des Auslaßventils konstant gehalten wird, wodurch die Dauer des Auslaßventil-Ereignisses reduziert wird.

4. ein Motor nach Anspruch 2 oder 3, welcher weiterhin Vorrichtungen umfaßt, um die Zündungseinstellung des Motors - während des Betriebs des EGI-Systems-vorzuverlegen, um in der verbrannten Ladung vor dem Öffnen des Auslaßventils eine weitere Erniedrigung der Temperatur zu erreichen, und um die Zündungseinstellung - am Ende des Betriebs des EGI-Systems- auf ihre normalen Einstellungen zurückzuverlegen.

## Revendications

1. Moteur à combustion interne (12) comportant un pot catalytique (10b) ainsi qu'un système d'inflammation des gaz d'échappement (IGE) destiné à faciliter la réduction de la durée d'amorçage du pot catalytique, le système IGE comprenant un moyen (21) destiné à enrichir la richesse du mélange de la charge combustible fournie aux cylindres du moteur pendant un démarrage à froid du moteur de façon à produire des gaz d'échappement contenant suffisamment d'hydrogène et de monoxyde de carbone pour pouvoir être enflammés lorsqu'ils sont froids lors de l'addition d'air au mélange de gaz d'échappement, ainsi qu'un moyen (18) destiné à enflammer le mélange en amont du pot catalytique (10b) de façon à engendrer une flamme destinée à réchauffer le pot catalytique, caractérisé en ce que le moteur comprend en outre un moyen (21) destiné à avancer le calage de l'allumage du moteur pendant la mise en oeuvre du système IGE de façon à obtenir une température plus basse de la charge brûlée avant l'ouverture de la soupape d'échappement, et destiné à ramener le calage de l'allumage à son réglage normal à la fin de la mise en oeuvre du système IGE.

2. Moteur à combustion interne (12) comportant un pot catalytique (10b) ainsi qu'un système d'inflammation des gaz d'échappement (IGE) destiné à faciliter la réduction de durée d'amorçage du pot catalytique, le système IGE comprenant un moyen (21) destiné à enrichir la richesse du mélange de la charge combustible fournie aux cylindres du moteur pendant un démarrage à froid du moteur de façon à produire des gaz d'échappement contenant suffisamment d'hydrogène et de monoxyde de carbone pour pouvoir être enflammés lorsqu'ils sont froids lors de l'admission d'air au mélange de gaz d'échappement, ainsi qu'un moyen (18) destiné à enflammer le mélange en amont du pot catalytique (10b) de façon à engendrer une flamme destinée à réchauffer le pot catalytique, caractérisé en ce que le moteur comprend en outre un moyen (21) destiné à retarder l'instant d'ouverture des soupapes d'échappement du moteur pendant la mise en oeuvre du système IGE de façon à obtenir une température plus basse de la charge brûlée avant l'ouverture de la soupape d'échappement, et destiné à ramener le calage des soupapes d'échappement à son réglage normal à la fin de la mise en oeuvre du système IGE.

3. Moteur selon la revendication 2, dans lequel l'instant de fermeture de la soupape d'échappement est maintenu invariable, la durée du mouvement de la soupape d'échappement étant ainsi réduite.

4. Moteur selon la revendication 2 ou 3, comprenant en outre un moyen destiné à avancer le calage de l'allumage du moteur pendant la mise en oeuvre du système IGE de façon à obtenir un abaissement supplémentaire de la température de la charge brûlée avant l'ouverture de la soupape d'échappement, et destiné à ramener le calage de l'allumage à son réglage normal à la fin de la mise en oeuvre du système IGE.

Fig. 1

Fig. 2

$T_{EVO}$

5% $H_2$ @ □ 1200 °K
       ○ 1400 °K
       △ 1600 °K
    uHC = 0 ppm $C_3H_8$

$T_{EVO}$

5% $H_2$ @ ■ 1200 °K
       ● 1400 °K
       ▲ 1600 °K
    uHC = 8000 ppm $C_3H_8$